# EUROPEAN PATENT APPLICATION

(11) **EP 4 641 725 A1**
(43) Date of publication of application: **29.10.2025**
(21) Application number: 25164195.7
(22) Date of filing: 17.03.2025
(51) Int. Cl.: H01M 10/05, H01M 10/42, H01M 50/105, H01M 50/178, H01M 50/186, H01M 50/55, H01M 50/595

(54) **SECONDARY BATTERY AND METHOD OF MANUFACTURING THE SAME**

(30) Priority: 22.04.2024 KR 20240053208
(71) Applicant: SAMSUNG SDI CO., LTD., Yongin-si, Gyeonggi-do 17084 (KR)
(72) Inventor: LEE, Je Hyun, 17084 Yongin-si, Gyeonggi-do (KR); KIM, Chi Young, 17084 Yongin-si, Gyeonggi-do (KR); SONG, Ho Jin, 17084 Yongin-si, Gyeonggi-do (KR); SONG, Jung Yeon, 17084 Yongin-si, Gyeonggi-do (KR)
(74) Representative: Gulde & Partner

(57) **Abstract**

A secondary battery and a method of manufacturing the same are disclosed. The method of manufacturing a secondary battery includes preparing an electrode assembly including a first electrode plate, a second electrode plate, and a separator, attaching a top tape to an upper end portion of the electrode assembly, attaching a bottom tape to surround a lower end portion of the electrode assembly, attaching a body tape to surround the upper end portion of the electrode assembly, and inserting the electrode assembly into a case, wherein each of the first and second electrode plates includes a current collector, an active material layer on the current collector, an uncoated portion at an end of the current collector adjacent to the electrode active material layer, and an electrode tab at an end portion of the uncoated portion.

## Description

### BACKGROUND

### 1. Field

Various embodiments of the present disclosure relate to a secondary battery and a method of manufacturing the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Aspects of embodiments provide a method of manufacturing a secondary battery according to claim 1 that includes preparing an electrode assembly having a first electrode plate, a second electrode plate, and a separator disposed between the first electrode plate and the second electrode plate, attaching a top tape to an upper end portion of the electrode assembly, attaching a bottom tape to the electrode assembly so as to surround a lower end portion of the electrode assembly, attaching a body tape to the electrode assembly so as to surround the upper end portion of the electrode assembly, and inserting the electrode assembly into a case, wherein the first electrode plate includes a first electrode current collector, a first electrode active material layer coated the first electrode current collector, a first electrode uncoated portion formed on an end of the first electrode current collector and not coated with the first electrode active material layer, and a first electrode tab provided at one end portion of the first electrode uncoated portion, and the second electrode plate includes a second electrode current collector, a second electrode active material layer coated on the second electrode current collector, a second electrode uncoated portion formed on an end of the second electrode current collector and not coated with the second electrode active material layer, and a second electrode tab provided at one end portion of the second electrode uncoated portion.

In some non-limiting examples, the first electrode active material layer may be coated on each of both surfaces of the first electrode current collector.

In some non-limiting examples, the first electrode uncoated portion may be formed on each of both ends of the first electrode current collector.

In some non-limiting examples, the second electrode active material layer may be coated on each of both surfaces of the second electrode current collector.

In some non-limiting examples, the second electrode uncoated portion may be formed on each of both ends of the second electrode current collector.

In some non-limiting examples, the upper end portion of the electrode assembly may include a sliding area, in which the thicknesses of the first electrode active material layer and the second electrode active material layer are reduced.

In some non-limiting examples, the attaching a body tape may include attaching the body tape around an upper outermost layer of the electrode assembly.

In some non-limiting examples, the attaching a body tape may include attaching the body tape onto the top tape so as to overlap at least a portion of the top tape.

In some non-limiting examples, the attaching a top tape may include attaching the top tap between the first electrode tab and the second electrode tab.

In some non-limiting examples, the attaching a top tape may include attaching the top tape around an upper surface of the electrode assembly and a pair of long side surfaces of the electrode assembly among side surfaces connected to the upper surface of the electrode assembly.

In some non-limiting examples, the method may further include attaching a side tape to at least one of side end portions of the electrode assembly before the attaching a top tape.

In some non-limiting examples, the attaching a body tape may include attaching the body tape so as to overlap at least a portion of the side tape.

In some non-limiting examples, the method may further include attaching a side tape to at least one of side end portions of the electrode assembly after the attaching a body tape.

In some non-limiting examples, the attaching a side tape may include attaching the side tape so as to overlap at least a portion of the body tape.

In some non-limiting examples, the attaching a top tape may include attaching the top tape so as to surround an edge of the electrode assembly in a leading-out direction of the first electrode tab and the second electrode tab.

In some non-limiting examples, the attaching a top tape may include attaching the top tape so as to fix a portion of the separator protruding outwardly from the upper end portion of the electrode assembly beyond the first electrode plate and the second electrode plate.

In some non-limiting examples, in the longitudinal direction of the electrode assembly, the body tape may have a length of 14% to 16% of the length of the electrode assembly.

In some non-limiting examples, the top tape, the body tape, or the bottom tape may be formed by applying an adhesive to a synthetic resin selected from among polyethylene terephthalate (PET), polypropylene (PP), and polyimide (PI).

In some non-limiting examples, the method may further comprise attaching a side tape to at least one of side end portions of the electrode assembly, after attaching the top tape.

Aspects of embodiments provide a secondary battery according to claim 15 that includes an electrode assembly having a first electrode plate, a second electrode plate, a separator disposed between the first electrode plate and the second electrode plate, a top tape attached to an upper end portion of the electrode assembly, a bottom tape surrounding a lower end portion of the electrode assembly, a body tape attached onto the top tape so as to surround the upper end portion of the electrode assembly, and a side tape attached to the electrode assembly so as to surround at least one of side end portions of the electrode assembly, and a case configured to accommodate the electrode assembly and including a sealing portion formed along an edge portion thereof, wherein the first electrode plate includes a first electrode current collector, a first electrode active material layer coated on the first electrode current collector, a first electrode uncoated portion formed on an end of the first electrode current collector and not coated with the first electrode active material layer, and a first electrode tab provided at an end portion of the first electrode uncoated portion, and the second electrode plate includes a second electrode current collector, a second electrode active material layer coated on the second electrode current collector, a second electrode uncoated portion formed on an end of the second electrode current collector and not coated with the second electrode active material layer, and a second electrode tab provided at an end portion of the second electrode uncoated portion.

In some non-limiting examples, the first electrode active material layer may be coated on each of both surfaces of the first electrode current collector.

In some non-limiting examples, the first electrode uncoated portion may be formed on each of both ends of the first electrode current collector.

In some non-limiting examples, the second electrode active material layer may be coated on each of both surfaces of the second electrode current collector.

In some non-limiting examples, the second electrode uncoated portion may be formed on each of both ends of the second electrode current collector.

In some non-limiting examples, the upper end portion of the electrode assembly may include a sliding area, in which the thicknesses of the first electrode active material layer and the second electrode active material layer are reduced.

In some non-limiting examples, the body tape may be attached around an upper outermost layer of the electrode assembly.

In some non-limiting examples, the top tape may be attached between the first electrode tab and the second electrode tab.

In some non-limiting examples, the top tape may be attached around an upper surface of the electrode assembly and a pair of long side surfaces of the electrode assembly among side surfaces connected to the upper surface of the electrode assembly.

In some non-limiting examples, the body tape may be attached so as to overlap at least a portion of the top tape and at least a portion of the side tape.

According to a non-limiting example of such a secondary battery, wherein the upper end portion of the electrode assembly includes a sliding area, thicknesses of the first electrode active material layer and the second electrode active material layer in the sliding area are smaller than in other areas.

According to a further non-limiting example of such a secondary battery the body tape is attached around an upper outermost layer of the electrode assembly.

According to a further non-limiting example of such a secondary battery the top tape is attached between the first electrode tab and the second electrode tab.

According to a further non-limiting example of such a secondary battery the top tape is attached around an upper surface of the electrode assembly and a pair of long side surfaces of the electrode assembly among side surfaces connected to the upper surface of the electrode assembly.

According to a further non-limiting example of such a secondary battery the body tape overlaps at least a portion of the top tape and at least a portion of the side tape.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a perspective view of a secondary battery according to an embodiment of the present disclosure;
FIG. 2 is an exploded perspective view of the secondary battery according to the embodiment of the present disclosure;
FIG. 3 is a plan view of an electrode assembly according to an embodiment of the present disclosure;
FIG. 4 is a diagram schematically showing a procedure for attaching tapes according to an embodiment of the present disclosure;
FIG. 5 is a plan view for explaining a tape attachment process according to an embodiment of the present disclosure;
FIGS. 6A to 6C are plan views showing comparative examples of an electrode assembly;
FIG. 7 is a heat map showing results of measuring flatness of the embodiment and the comparative examples;
FIG. 8 is a data table showing results of checking thickness balance between respective portions of battery cells according to the embodiment and the comparative examples;
FIG. 9A to 9E illustrate graphs and a table showing results of evaluating heat exposure limits of the embodiment and the comparative examples;
FIG. 10 is a view showing short-circuit points and deconstruction analysis of the comparative examples based on the heat exposure limit evaluation;
FIG. 11 is a view schematically showing a smartphone equipped with a secondary battery according to an embodiment of the present disclosure;
FIGS. 12A and 12B are perspective views of a battery pack according to an embodiment of the present disclosure; and
FIGS. 13A and 13B show examples of vehicle bodies and body parts to which one or more embodiments of the present disclosure may be applied.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain example embodiments in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A secondary battery may include an electrode assembly, which includes a positive electrode plate, a separator, and a negative electrode plate, and an exterior body accommodating the electrode assembly. The exterior body may be classified into a circular type, a prismatic type, and a pouch type depending on the shape thereof.
A pouch-type secondary battery may include a laminated pouch that is easy to deform into various shapes and is lightweight, and may further include a protection circuit module mounted on one side of the laminated pouch to control charging and discharging of the battery. During manufacture of the electrode assembly, a slurry for an electrode mixture layer may be coated on an electrode current collector and may then be dried. However, the slurry may flow down, and thus a sliding area in which an electrode active material layer has a small thickness may be formed on at least one end of the electrode assembly.

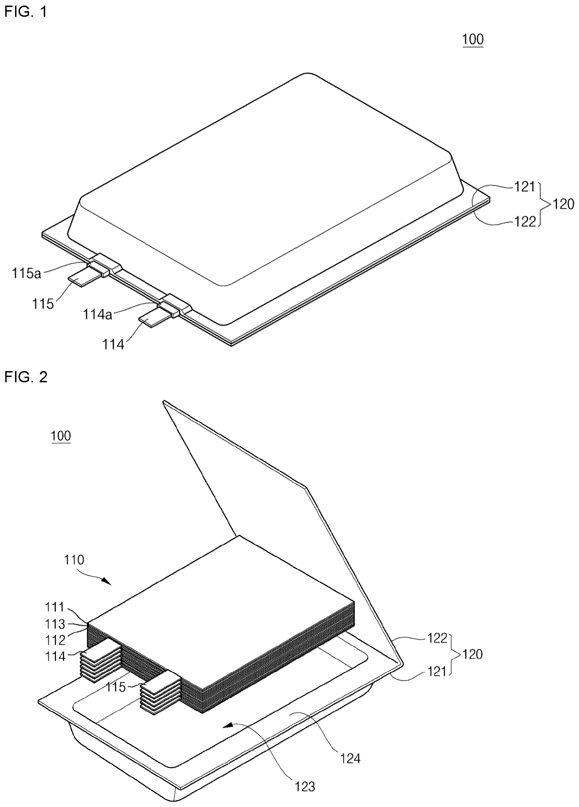

FIG. 1 is a perspective view of a secondary battery according to an embodiment of the present disclosure, and FIG. 2 is an exploded perspective view of the secondary battery according to the embodiment of the present disclosure.

Referring to FIGS. 1 and 2, a secondary battery 100 according to an embodiment of the present disclosure may include an electrode assembly 110 and a case 120. The electrode assembly 110 may be accommodated in the case 120.

An electrode assembly 110 may be formed by winding or stacking a stack of a first electrode plate 111, a separator 113, and a second electrode plate 112, which are formed as thin plates or films. When the electrode assembly 110 is a wound stack, a winding axis may be parallel to the longitudinal direction of the case 120. In other embodiments, the electrode assembly 110 may be a stack type rather than a winding type, and the shape of the electrode assembly 110 is not limited in the present disclosure. In addition, the electrode assembly may be a Z-stack electrode assembly in which a positive electrode plate and a negative electrode plate are inserted into both sides of a separator, which is then bent into a Z-stack. In addition, one or more electrode assemblies 110 may be stacked such that long sides of the electrode assemblies 110 are adjacent to each other and accommodated in the case, and the number of electrode assemblies 110 in the case is not limited in the present disclosure. The first electrode plate 111 of the electrode assembly 110 may act as a positive electrode, and the second electrode plate 112 may act as a negative electrode. Of course, the reverse is also possible.

The first electrode plate 111 may be formed by applying a first electrode active material, such as graphite or carbon, to a first electrode current collector formed of a metal foil, such as copper, a copper alloy, nickel, or a nickel alloy. The first electrode plate 111 may include a first electrode tab (e.g., a first uncoated portion) that is a region to which the first electrode active material is not applied.

The first electrode active material may be a negative electrode active material. The negative active material may include a material capable of reversibly intercalating/deintercalating lithium ions, a lithium metal, an alloy of the lithium metal, a material capable of doping and dedoping lithium, or transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For an non-limiting example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

In some embodiments, a first electrode tab 111a may be formed by being cut in advance to protrude to the one side of the electrode assembly 110 when the first electrode plate 111 is manufactured, or the first electrode plate 111 may protrude to the one side of the electrode assembly 110 more than (e.g., farther than or beyond) the separator 113 without being separately cut. A first lead tab 114 of an external terminal may be welded to the first electrode tab 111a of the first electrode plate 111 to be electrically connected to the outside. In some examples, one end of the first lead tab 114 may be connected to the first electrode tab 111a to be electrically connected to the first electrode plate 111. The other end of the first lead tab 114 may protrude and extend outwardly of the electrode assembly 110. An insulating member 114a may be attached to the first lead tab 114. The insulating member 114a may be a tab film for insulation. The insulating member 114a may prevent short circuit between the case 120 and the first lead tab 114.

The second electrode plate 112 may be formed by applying a second electrode active material, such as a transition metal oxide, on a second electrode current collector formed of a metal foil, such as aluminum or an aluminum alloy. The second electrode plate 112 may include a second electrode tab (e.g., a second uncoated portion) that is a region to which the second electrode active material is not applied.

The second electrode active material may be a positive electrode active material. A compound capable of reversible intercalation and deintercalation of lithium (lithiated intercalation compound) may be used as the positive electrode active material. In some embodiments, one or more types of complex oxides of lithium and a metal selected from cobalt, manganese, nickel, and a combination thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}XcO_{2-α}D_{α} (0.90≤a≤1.8, 0≤b≤0.5, 0≤c≤0.5, 0<α<2); LiₐNi1-b-cMnbXcO2-αDα (0.90≤a≤1.8, 0≤b≤0.5, 0≤c≤0.5, 0<α<2); LiₐNi_{b}Co_{c}L1_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄) ₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

In some examples, a second electrode tab 112a may be formed in advance through cutting so as to protrude in one direction when manufacturing the second electrode plate 112 or may be formed so as to protrude farther in one direction than the separator 113 without a separate cutting process. A second lead tab 115 of an external terminal may be welded to the second electrode tab 112a of the second electrode plate 112 to be electrically connected to the outside. In some examples, one end of the second lead tab 115 may be connected to the second electrode tab 112a to be electrically connected to the second electrode plate 112. The other end of the second lead tab 115 may protrude and extend outwardly of the electrode assembly 110. An insulating member 115a may be attached to the second lead tab 115. The insulating member 115a may be a tab film for insulation. The insulating member 115a may prevent short circuit between the case 120 and the second lead tab 115.

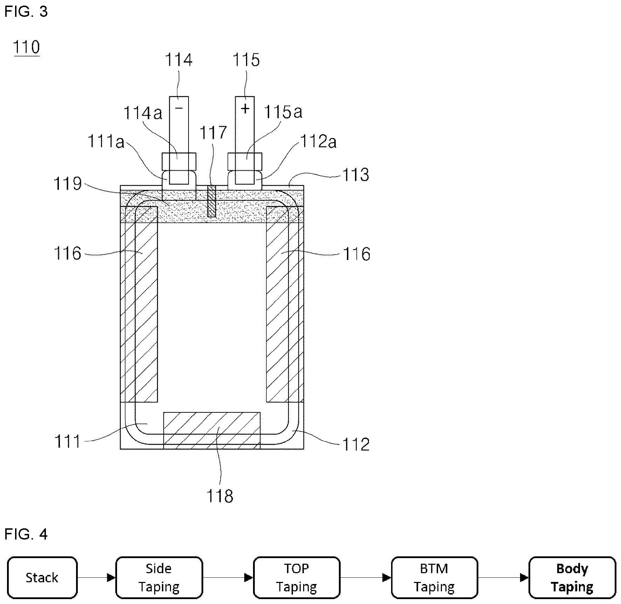

In some examples, the first lead tab 114 may be located on the upper left surface of the electrode assembly 110, and the second lead tab 115 may be located on the upper right surface of the electrode assembly 110. The first lead tab 114 and the second lead tab 115 may be located on one surface facing in the same direction. In such an embodiment, the left side and the right side may be defined on the basis of FIG. 3 for convenience of description, and the positions thereof may be changed if the electrode assembly 110 is rotated left and right or up and down.

The separator 113 may be located between the first electrode plate 111 and the second electrode plate 112 to prevent short circuit therebetween while allowing lithium ions to move therebetween. For example, the separator 113 may include polyethylene, polypropylene, or a composite film of polyethylene and polypropylene. Depending on the type of lithium secondary battery, the separator 113 may be present between the first electrode plate 111 (e.g., the negative electrode) and the second electrode plate 112 (e.g., the positive electrode).

As the separator 113, polyethylene, polypropylene, polyvinylidene fluoride, or a multilayer film of two or more layers thereof may be used. The separator 113 may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer. The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH) ₂, boehmite, and combinations thereof but is not limited thereto. The organic material and the inorganic material may be mixed in one coating layer or may be in the form of a coating layer containing an organic material and a coating layer containing an inorganic material that are laminated on each other.

The electrode assembly 110 may be substantially accommodated in the case 120 together with an electrolyte. The electrolyte may be in a liquid, solid, or gel form. An electrolyte for a lithium secondary battery may include a non-aqueous organic solvent and a lithium salt.

The non-aqueous organic solvent acts as a medium through which ions involved in the electrochemical reaction of the battery can move. The non-aqueous organic solvent may be a carbonate-based, an ester-based, an ether-based, a ketone-based, an alcohol-based solvent, an aprotic solvent, and may be used alone or in combination of two or more. In addition, when a carbonate-based solvent is used, a mixture of cyclic carbonate and chain carbonate may be used.

The case 120 may provide a space in which the electrode assembly 110 is accommodated, and may be formed in various shapes, e.g., a pouch type, a prismatic type, or a cylindrical type. In some examples, a pouch-type case 120 will be described as one embodiment. In a state of accommodating the electrode assembly 110, the case 120 may be sealed in such a manner that sealing portions 124 provided on an edge thereof about each other. In such an embodiment, sealing may be achieved with a tab film disposed between the sealing portions 124. The sealing portions 124 of the case 120 may be made of a thermally fusible material, and the thermally fusible layers may be adhered to each other to seal the case 120. Because a thermally fusible material generally has weak adhesion to metal, a tab film of a thin film form may be attached to the tab and fused to the case 120. The case 120 may include a first pouch film 121 in which the electrode assembly 110 is accommodated and a second pouch film 122 coupled to the first pouch film 121. An integrated rectangular pouch film may be folded along the center thereof in the longitudinal direction to divide the case 120 into the first pouch film 121 and the second pouch film 122. In some examples, a receiving recess 123, in which the electrode assembly 110 is received, may be formed in the first pouch film 121 through a press processing or the like, and the sealing portion 124 for sealing with the second pouch film 122 may be formed on the first pouch film 121. The first lead tab 114 and the second lead tab 115 may protrude outwardly of the case 120 through the sealing portion 124. In such an embodiment, the insulating members 114a and 115a attached to the first lead tab 114 and the second lead tab 115 may be in contact with the sealing portion 124.

In some examples, during a heater press charge (HPC) process (process of heat-pressing and charging a polymer cell), tapes may be attached to the electrode assembly 110 in order to increase adhesion of a negative electrode sliding portion. However, if a body tape is first attached to a sliding area before tapes are attached to other areas, the insertability of the electrode assembly may deteriorate, and cell top adhesion control dispersion may occur. The sliding area may be an area in which a slurry flows down and thus the thickness of an electrode active material layer is reduced.

Thus, in the embodiment, an upper body tape may be employed in order to complement (e.g., compensate) a negative electrode sliding portion, and a process of attaching the upper body tape may be performed in the last stage, whereby the insertability of the electrode assembly may be improved, and the heat exposure/drop characteristics thereof may be improved. Further, due to use of the body tape, adhesion of the upper end portion of the battery cell may be increased, and thickness balance between the upper end, medium, and lower end portions of the battery cell may be ensured, thereby greatly improving the quality of the battery cell.

Hereinafter, the tape attachment process will be described in more detail.

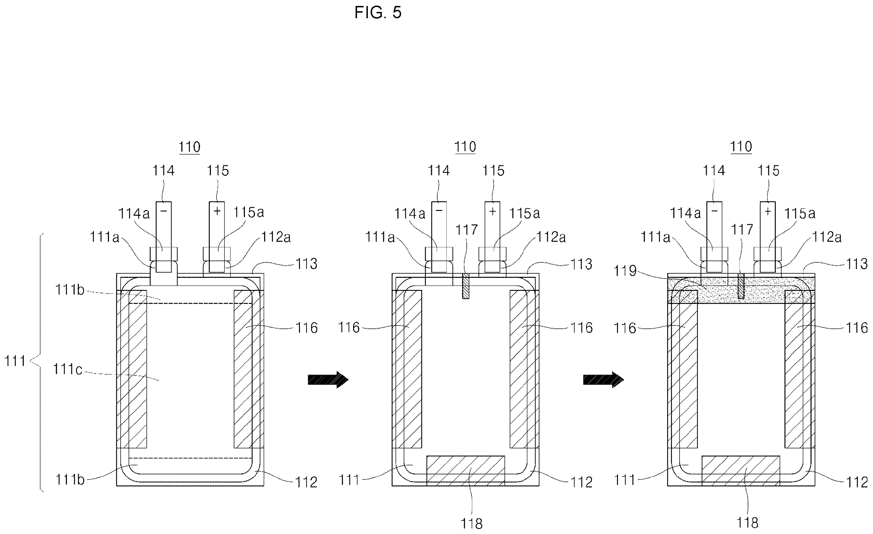

FIG. 3 is a plan view of an electrode assembly according to an embodiment of the present disclosure, FIG. 4 is a diagram schematically showing a procedure for attaching tapes according to an embodiment of the present disclosure, and FIG. 5 is a plan view for explaining a tape attachment process according to an embodiment of the present disclosure.

Referring to FIG. 3, the electrode assembly 110 may include a top tape 117 attached to the upper end portion thereof, a bottom tape 118 attached thereto so as to surround the lower end portion thereof, a body tape 119 attached to the upper surface of the top tape 117 while surrounding the upper end portion thereof, and a side tape 116 attached thereto so as to surround at least one of the side end portions thereof. In such an embodiment, the upper end portion of the electrode assembly 110 may include a sliding area, in which the thicknesses of the first electrode active material layer and the second electrode active material layer are reduced. For example, thicknesses of the first electrode active material layer and the second electrode active material layer in the sliding area are smaller than thicknesses in other areas.

In some examples, the side tape 116 may be attached to the electrode assembly 110 so as to surround, e.g., wrap around, each of both side end portions of the electrode assembly 110 in the longitudinal direction. For example, referring to FIG. 3, the side tape 116 may extend (e.g., lengthwise) perpendicularly to the body tape 119 to cover lateral sides of the electrode assembly 110.

In some examples, the bottom tape 118 may be attached to the electrode assembly 110 so as to surround, e.g., wrap around, the lower end portion of the electrode assembly 110. For example, referring to FIG. 3, the bottom tape 118 and the top tape 117 may be on opposite surfaces or ends of the electrode assembly 110.

In some examples, the top tape 117 may be attached between the first electrode tab 111a and the second electrode tab 112a. In some examples, the top tape 117 may be attached between the first lead tab 114 and the second lead tab 115. In other embodiments, the top tape 117 may be attached around the upper surface of the electrode assembly 110 and a pair of long side surfaces of the electrode assembly 110 among the side surfaces connected to the upper surface of the electrode assembly 110. For example, referring to FIG. 3, the top tape 117 may be attached to a surface of the electrode assembly 110 through which the first and second electrode tabs 111a and 112a extend.

In some examples, the body tape 119 may be attached around the upper outermost layer of the electrode assembly 110. In other embodiments, the body tape 119 may be attached to the electrode assembly 110 so as to overlap at least a portion of the top tape 117 and at least a portion of the side tape 116. For example, referring to FIG. 3, the body tape 119 may cover, e.g., overlap, the upper end portion of the electrode assembly 110 (e.g., including completely covering the top tape 117).

Hereinafter, the tape attachment process will be described with reference to FIGS. 4 and 5. Referring to FIGS. 4 and 5, first, the electrode assembly 110, which includes the first electrode plate 111, the second electrode plate 112, and the separator 113 interposed between the first electrode plate 111 and the second electrode plate 112, may be prepared. In such an embodiment, the electrode assembly 110 may be implemented in a stack form.

Referring to FIG. 5, the first electrode plate 111 may include a first electrode current collector, a first electrode active material layer 111c coated on the first electrode current collector, a first electrode uncoated portion 111b at an end of the first electrode current collector adjacent to the first electrode active material layer 111c (i.e., the first electrode uncoated portion 111b may be an exposed edge of the first electrode current collector that is not coated), and the first electrode tab 111a provided at an end portion of the first electrode uncoated portion 111b. A structure of the second electrode plate 112 may be substantially the same as that of the first electrode plate 111. During manufacture of the electrode assembly 110, a slurry for the electrode active material layer coated on the electrode current collector may flow downwardly (i.e., from the top of the electrode assembly 110 adjacent to the first and second electrode tabs 111a and 112a toward the bottom of the electrode assembly 110 opposite the top of the electrode assembly 110) during drying, thereby defining a sliding area at the top of the electrode assembly 110. In other words, due to the flow of the slurry for the electrode active material layer from the top to the bottom of the electrode assembly 110, the dried amount (e.g., the thickness) of the electrode active material layer on the electrode current collector at the top of the electrode assembly 110 may be reduced (e.g., smaller), as compared to the amount (e.g., the thickness) of the electrode active material layer on the electrode current collector at the middle and bottom of the electrode assembly 110. For example, referring to FIG. 5, the sliding area at the top of the electrode assembly 110 may refer to the top area of the electrode active material layer 111c. In some examples, preparing the electrode assembly 110 may include forming a sliding area in the upper end portion of the electrode assembly 110, such that thicknesses of the first electrode active material layer 111c and the second electrode active material layer in the sliding area are smaller than thicknesses in other areas.

In some examples, the top tape 117 may be attached to the upper end portion of the electrode assembly 110 (TOP Taping). In some examples, as described above, the top tape 117 may be attached between the first electrode tab 111a and the second electrode tab 112a. In other embodiments, the top tape 117 may be attached around the upper surface of the electrode assembly 110 and a pair of long side surfaces (e.g. major surfaces) of the electrode assembly 110 among the side surfaces connected to the upper surface of the electrode assembly 110. In some examples, the top tape 117 may be attached so as to surround, e.g., wrap around an edge of, the electrode assembly 110 in the direction in which the first electrode tab 111a and the second electrode tab 112a are led out. In some examples, the top tape 117 may be attached so as to fix a portion of the separator 113 protruding outwardly from the upper end portion of the electrode assembly 110 beyond the first electrode plate 111 and the second electrode plate 112. For example, referring to FIG. 5, the top tape 117 may be attached to (e.g., directly contact) two major overlapping surfaces of the electrode assembly 110, such that the top tape 117 may extend lengthwise from one major surface of the electrode assembly 110 to another major surface of the electrode assembly 110 while wrapping around the surface of the electrode assembly 110 through which the first and second electrode tabs 111a and 112a extend.

Subsequently, in some examples, the bottom tape 118 may be attached to the electrode assembly 110, e.g. to the lower end portion of the electrode assembly 110, so as to surround the lower end portion of the electrode assembly 110 (BTM Taping). For example, referring to FIG. 5, the bottom tape 118 may extend lengthwise along a surface of the electrode assembly 110 that is opposite the first and second electrode tabs 111a and 112a, and the bottom tape 118 may be attached to (e.g., directly contact) the two major overlapping surfaces of the electrode assembly 110.

Subsequently, in some examples, the body tape 119 may be attached to the electrode assembly 110, e.g. to upper end portion of the electrode assembly 110, so as to surround, e.g., wrap around, the upper end portion of the electrode assembly 110 (Body Taping). In some examples, the body tape 119 may be attached around the upper outermost layer of the electrode assembly 110, e.g., the body tape 119 may be wrapped around the entire perimeter of the electrode assembly 110 at an upper end portion (i.e., a portion from which the first and second electrode tabs 111a and 112a protrude) of the electrode assembly 110. In some examples, the body tape 119 may be attached onto the top tape 117, such that at least a portion of the top tape 117 is between the body tape 119 and a major surface of the electrode assembly 110. In other embodiments, the body tape 119 may be attached onto the top tape 117 so as to overlap at least a portion of the top tape 117, e.g., the body tape 119 may cover the entirety of the top tape 117. For example, the length of the body tape 119 in the longitudinal direction of the electrode assembly 110 (e.g., along a direction of an imaginary line connecting the top tape 117 and the bottom tape 118) may be about 14% to about 16% of the length of the electrode assembly 110 in the longitudinal direction. For example, a length of an overlap between the body tape 119 and a major surface of the electrode assembly 110 may be about 14% to about 16% of the length of the electrode assembly 110 in the longitudinal direction (e.g., so the length of the body tape 119 may be measured along the major surface of the electrode assembly 110). For example, the length of the body tape 119 in the longitudinal direction of the electrode assembly 110 may completely cover the electrode uncoated portion and at least a top portion of the active material layer (i.e., the sliding area), such that the body tape 119 may compensate (e.g., complement) for the reduced thickness of the active material layer in the top portion of the electrode assembly 110.

In some examples, before attachment of the top tape 117, the side tape 116 may be attached to at least one of the side end portions of the electrode assembly 110 (Side Taping). In this case, the body tape 119 may be attached so as to overlap at least a portion of the side tape 116 (e.g., so at least a portion of the side tape 116 may be between the body tape 119 and the major surface of the electrode assembly 110).

In other embodiments, after attachment of the body tape 119, the side tape 116 may be attached to at least one of the side end portions of the electrode assembly 110 (Side Taping). In this case, the side tape 116 may be attached so as to overlap at least a portion of the body tape 119 (e.g., so at least a portion of the body tape 119 may be between the side tape 116 and the major surface of the electrode assembly 110).

In some examples, the top tape 117, the body tape 119, the bottom tape 118, and/or the side tape 116 may be formed by applying an adhesive to a synthetic resin selected from among polyethylene terephthalate (PET), polypropylene (PP), and polyimide (PI), none of which reacts with the electrolyte.

In some examples, after the above-described taping process is completed, the electrode assembly 110 may be inserted into the case 120.

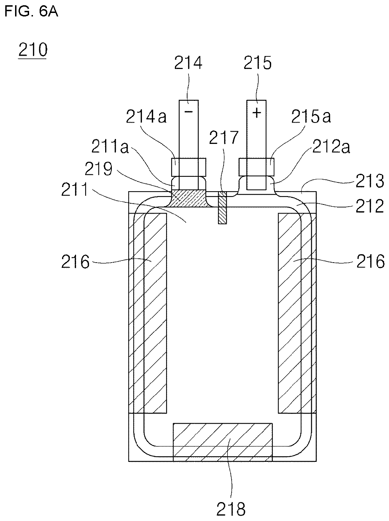

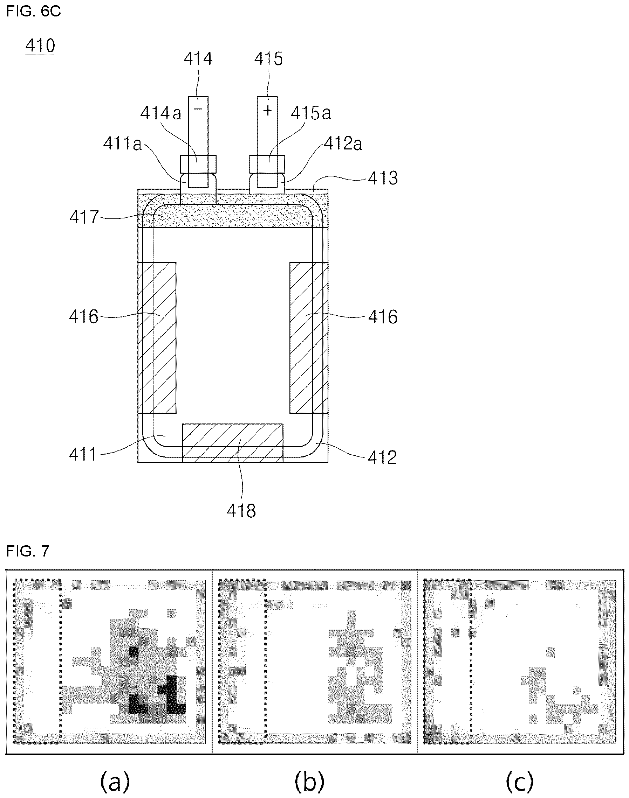

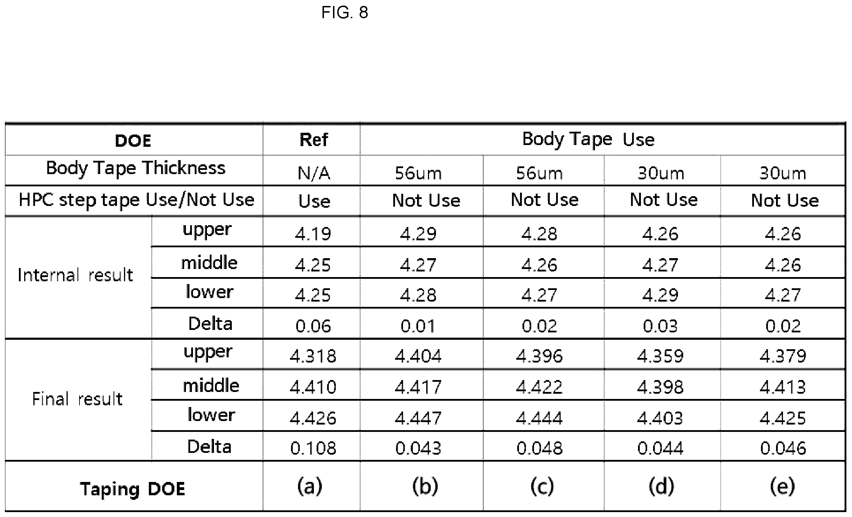

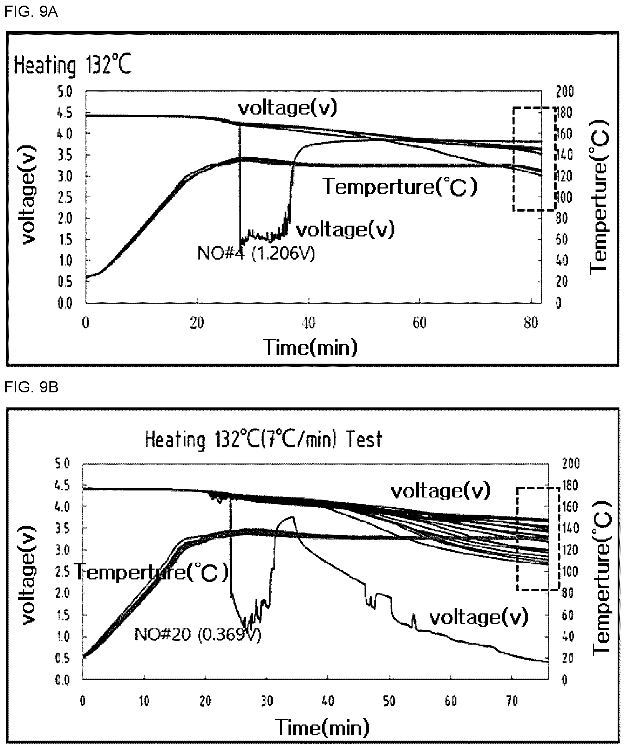

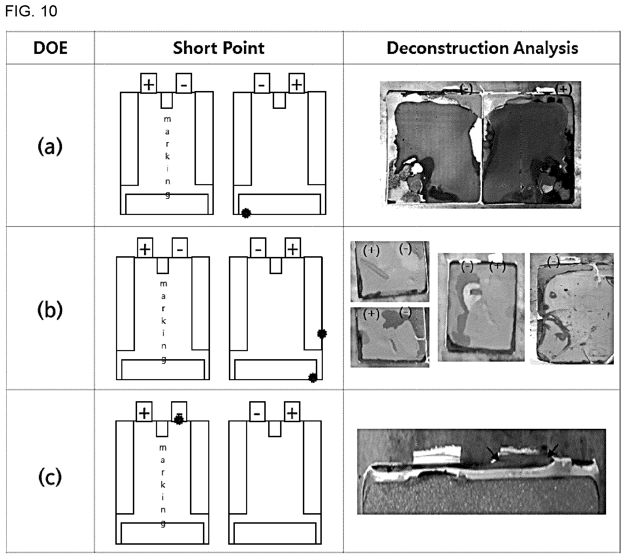

Hereinafter, the effect of the embodiment will be described through comparison between the embodiment and comparative examples with reference to FIGS. 6A to 10. FIGS. 6A-6C are plan views showing comparative examples of an electrode assembly. FIG. 7 is a heat map showing results of measuring flatness of the embodiment and the comparative examples. FIG. 8 is a data table showing results of checking thickness balance between respective portions of battery cells according to the embodiment and the comparative examples. FIGS. 9A-9E illustrate graphs and a table showing results of evaluating heat exposure limits of the embodiment and the comparative examples. FIG. 10 is a view showing short-circuit points and deconstruction analysis of the comparative examples based on the heat exposure limit evaluation.

FIG. 6A is a schematic view of comparative example 1, which corresponds to a battery cell 210 without a body tape. That is, the battery cell 210 may include a side tape 216, a top tape 217, and a bottom tape 218, and may further include a step tape 219. In some examples, the step tape 219 may be applied to comparative example 1 during an HPC process. Because a first electrode plate 211, a second electrode plate 212, a separator 213, a first electrode tab 211a, a second electrode tab 212a, a first lead tab 214, a second lead tab 215, and insulating members 214a and 215a of comparative example 1 have the same structures as those of the embodiment, description thereof will be omitted.

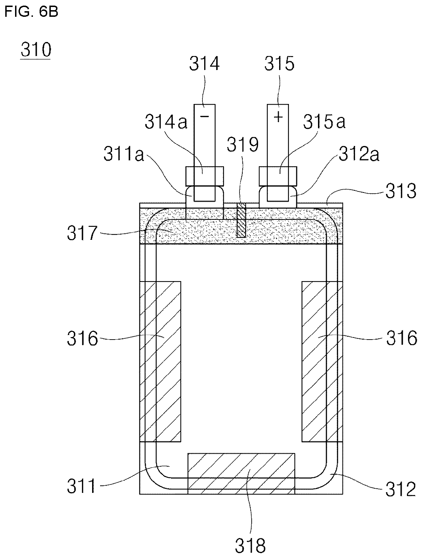

FIG. 6B is a schematic view of comparative example 2, which corresponds to a battery cell 310 provided with a body tape 317, which is attached before attachment of a top tape 319 (i.e., the body tape 317 may be between the top tape 319 and the electrode assembly). The battery cell 310 may include a side tape 316, a body tape 317, a bottom tape 318, and a top tape 319. Because a first electrode plate 311, a second electrode plate 312, a separator 313, a first electrode tab 311a, a second electrode tab 312a, a first lead tab 314, a second lead tab 315, and insulating members 314a and 315a of comparative example 2 have the same structures as those of the embodiment, description thereof will be omitted.

FIG. 6C is a schematic view of comparative example 3, which corresponds to a battery cell 410 provided with a body tape 417 without a top tape. The battery cell 410 may include a side tape 416, a body tape 417, and a bottom tape 418. Because a first electrode plate 411, a second electrode plate 412, a separator 413, a first electrode tab 411a, a second electrode tab 412a, a first lead tab 414, a second lead tab 415, and insulating members 414a and 415a of comparative example 3 have the same structures as those of the embodiment, description thereof will be omitted.

FIG. 7 is a heat map for comparing results of measuring the flatness of the embodiment and the comparative examples. Part (a) of FIG. 7 shows a result of measuring the flatness of comparative example 1 provided with the step tape 219 having a thickness of about 60 µm but without a separate body tape. Part (b) of FIG. 7 shows a result of measuring the flatness of comparative example 3 provided with the body tape 417 having a thickness of about 56 µm but without a top tape. Part (c) of FIG. 7 shows a result of measuring the flatness of the embodiment of the present disclosure provided with the body tape 119 having a thickness of about 30 µm but without a step tape.

A portion indicated by a dashed rectangle in each of parts (a) through (c) of FIG. 7 represents the position of an upper end portion of a battery cell (i.e., an upper end portion of the electrode assembly 110). It may be seen that the color of the heat map of the electrode assembly according to the embodiment of the present disclosure (i.e., part (c) of FIG. 7) is uniform compared to the other electrode assemblies (i.e., parts (a) and (b of FIG. 7). Thus, the embodiment of the present disclosure has the best flatness balance between respective portions of the battery cell.

In FIG. 8, (a) to (e) represent results of measuring the thicknesses of upper end, middle, and lower end portions in comparative example 1, comparative example 2 provided with the body tape 317 having a thickness of about 56 µm, comparative example 3 provided with the body tape 417 having a thickness of about 56 µm, comparative example 2 provided with the body tape 317 having a thickness of about 30 µm, and the embodiment of the present disclosure provided with the body tape 119 having a thickness of about 30 µm, respectively.

Referring to FIG. 8, it may be seen that thickness balance between upper end, medium, and lower end portions in the electrode assembly of comparative example 2, comparative example 3, and the embodiment, each of which is provided with a body tape, is improved compared to comparative example 1 not provided with a body tape.

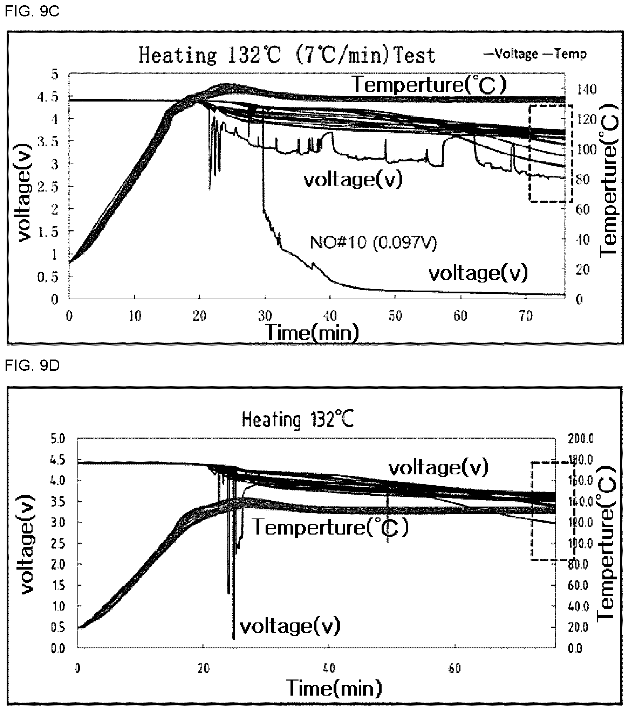

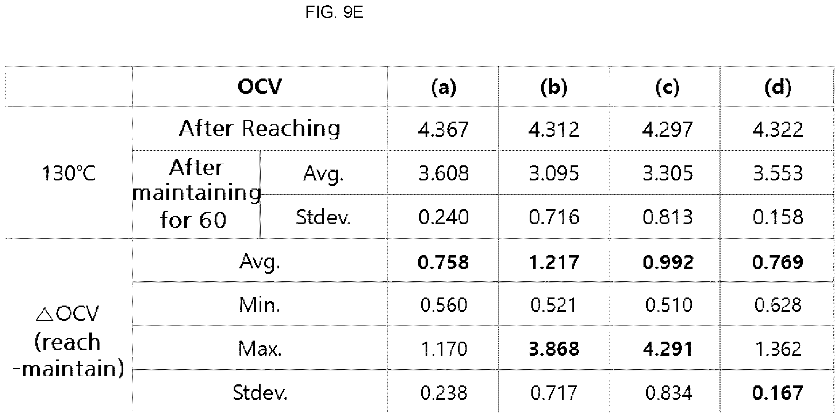

FIGS. 9A to 9D are graphs indicating results of evaluating heat exposure limits when a heating temperature reaches about 132 degrees Celsius (°C) at the rate of 7 degrees Celsius (°C)/min, and FIG. 9E is an open circuit voltage (OCV) data table. FIG. 9A and (a) in FIG. 9E correspond to comparative example 1, and FIG. 9B and (b) in FIG. 9E correspond to comparative example 2 provided with the body tape 317 having a thickness of about 56 µm. FIG. 9C and (c) in FIG. 9E correspond to comparative example 3 provided with the body tape 417 having a thickness of about 56 µm, and FIG. 9D and (d) in FIG. 9E correspond to the embodiment provided with the body tape 119 having a thickness of about 30 µm.

Referring to portions indicated by dashed rectangles in FIGS. 9A to 9D and the results shown in FIG. 9E, it may be seen that the OCV value of the embodiment shown in FIG. 9D and (d) in FIG. 9E has an average (Avg.) of 0.769 and a standard deviation (Stdev.) of 0.167 in a process in which the heating temperature reaches and is maintained at about 132 degrees Celsius (°C), i.e., OCV drop at the end of the process is stable.

FIG. 10 is a view showing short-circuit points and deconstruction analysis when the comparative examples are exposed to heat of 132 degrees Celsius (°C). It may be seen from (a) in FIG. 10 corresponding to comparative example 1 that upper end and lower end portions of a negative electrode are severely oxidized. It may be seen from (b) in FIG. 10 corresponding to comparative example 2 provided with the body tape 317 having a thickness of about 56 µm that an inner lower portion thereof is oxidized. It may be seen from (c) in FIG. 10 corresponding to comparative example 3 having the body tape 417 having a thickness of about 56 µm that an upper end portion of a negative electrode is oxidized.

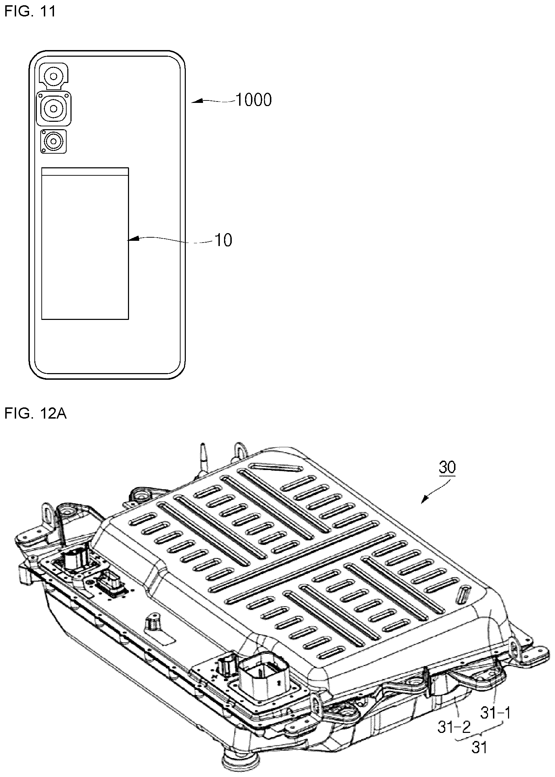

FIG. 11 is a view schematically showing a smartphone equipped with a secondary battery according to an embodiment of the present disclosure. As shown in FIG. 11, a secondary battery 10 according to the above-described embodiment of the present disclosure may be a small battery mounted in a small portable device such as a smartphone 1000. In this case, because the exemplary secondary battery 10 is configured to be able to increase the capacity thereof while having a slim internal structure, the above-described secondary battery 10 may be a battery suitable for application to small portable devices. As used herein, the terms "secondary battery" and "battery" have the same meaning and are different only in expression for convenience of description. The secondary battery according to the above-described embodiment may be increased in size to be used to manufacture a battery pack.

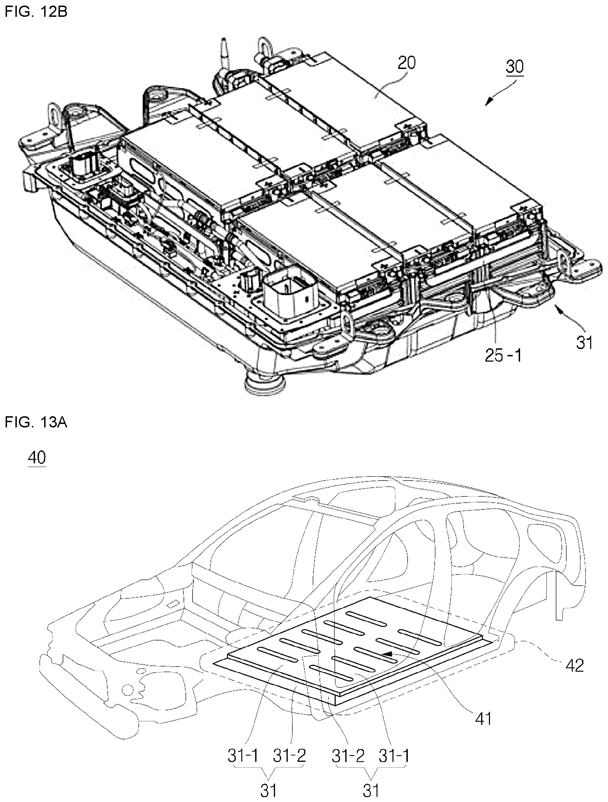

FIGS. 12A and 12B illustrate perspective views of an example of a battery pack 30. The battery pack 30 may include a plurality of battery modules 20 and a housing 31 for accommodating the plurality of battery modules 20. For example, the housing 31 may include first and second housings 31-1 and 31-2 coupled in opposite directions through the plurality of battery modules 20. The plurality of battery modules 20 may be electrically connected to each other by using a bus bar 25-1, and the plurality of battery modules 20 may be electrically connected to each other in a series/parallel or series-parallel mixed method, thereby obtaining desired (e.g., required) electrical output.

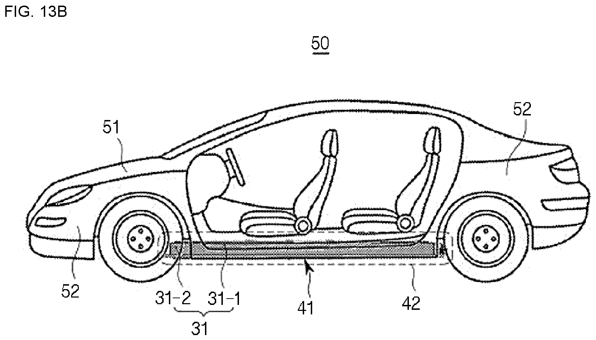

FIGS. 13A and 13B illustrate perspective and side views of examples of a vehicle body 40 and vehicle components. In FIG. 13A, the battery pack 30 may include the first housing 31-1 (i.e., a battery pack cover), which is a part of a vehicle underbody 41, and a second housing 31-2 (i.e., a pack frame) disposed under the vehicle underbody 41. The second housing 31-2 and the first housing 31-1 may be integrally formed with a vehicle floor 42. The vehicle underbody 41 separates the inside and outside of a vehicle, and the second housing 31-2 may be disposed outside the vehicle.

Referring to FIG. 13B, a vehicle 50 may be formed by combining additional parts, such as a hood 51 in front of the vehicle and fenders 52 respectively located in the front and rear of the vehicle body 40. The vehicle 50 may include the battery pack 30 that includes the first housing 31-1 (i.e., the battery pack cover) and the second housing 31-2 (i.e., the pack frame), and the battery pack 30 may be coupled to the vehicle body 40.

As is apparent from the above description, according to the present disclosure, there may be provided a secondary battery and a method of manufacturing the same, in which a body tape is attached to an electrode assembly in order to complement a sliding area of the electrode assembly, whereby adhesion of an upper end portion of the electrode assembly may be increased, and thickness balance between upper end, medium, and lower end portions of a battery cell (i.e., an electrode assembly) may be ensured, thereby improving the quality of the battery cell.

Although the present disclosure has been described with reference to embodiments and drawings illustrating aspects thereof, the present disclosure is not limited thereto. Various modifications and variations can be made by a person skilled in the art to which the present disclosure belongs within the scope of the technical idea of the present disclosure and the claims and their equivalents, below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from scope of the present invention as set forth in the following claims.

## Claims

1. A method of manufacturing a secondary battery (10, 100), the method comprising:
preparing an electrode assembly (110) including a first electrode plate (111, 211, 311, 411), a second electrode plate (112, 212, 312, 412), and a separator (113, 213, 313, 413) between the first electrode plate (111, 211, 311, 411) and the second electrode plate (112, 212, 312, 412);
attaching a top tape (117, 217, 319) to an upper end portion of the electrode assembly (110);
attaching a bottom tape (118, 218, 318, 418) to a lower end portion of the electrode assembly (110), the bottom tape (118, 218, 318, 418) surrounding the lower end portion of the electrode assembly (110);
attaching a body tape (119, 317, 417) to the upper end portion of the electrode assembly (110), the body tape (119, 317, 417) surrounding the upper end portion of the electrode assembly (110); and
inserting the electrode assembly (110) into a case (120),
wherein the first electrode plate (111, 211, 311, 411) includes a first electrode current collector, a first electrode active material layer (111c) on the first electrode current collector, a first electrode uncoated portion (111b) at an end of the first electrode current collector adjacent to the first electrode active material layer (111c), and a first electrode tab (111a, 211a, 311a, 411a) at an end portion of the first electrode uncoated portion (111b), and
wherein the second electrode plate (112, 212, 312, 412) includes a second electrode current collector, a second electrode active material layer on the second electrode current collector, a second electrode uncoated portion at an end of the second electrode current collector adjacent to the second electrode active material layer, and a second electrode tab (112a, 212a, 312a, 412a) at an end portion of the second electrode uncoated portion.

2. The method as claimed in claim 1, wherein preparing the electrode assembly (110) includes forming a sliding area in the upper end portion of the electrode assembly (110), such that thicknesses of the first electrode active material layer (111c) and the second electrode active material layer in the sliding area are smaller than thicknesses in other areas.

3. The method as claimed in claim 1 or 2, wherein attaching the body tape (119, 317, 417) includes attaching the body tape (119, 317, 417) around an upper outermost layer of the electrode assembly (110).

4. The method as claimed in claims 1 to 3, wherein attaching the body tape (119, 317, 417) includes attaching the body tape (119, 317, 417) onto the top tape (117, 217, 319), such that at least a portion of the top tape (117, 217, 319) is between the body tape (119, 317, 417) and a major surface of the electrode assembly (110).

5. The method as claimed in claims 1 to 4, wherein attaching the top tape (117, 217, 319) includes attaching the top tape (117, 217, 319) between the first electrode tab (111a, 211a, 311a, 411a) and the second electrode tab (112a, 212a, 312a, 412a).

6. The method as claimed in claims 1 to 5, wherein attaching the top tape (117, 217, 319) includes attaching the top tape (117, 217, 319) around an upper surface of the electrode assembly (110), the top tape (117, 217, 319) contacting a pair of major surfaces of the electrode assembly (110) connected to the upper surface of the electrode assembly (110).

7. The method as claimed in claims 1 to 6, further comprising attaching a side tape (116, 216, 316, 416) to at least one of side end portions of the electrode assembly (110), before attaching the top tape (117, 217, 319).

8. The method as claimed in claim 7, wherein attaching the body tape (119, 317, 417) includes attaching the body tape (119, 317, 417) to overlap at least a portion of the side tape (116, 216, 316, 416), such that the at least a portion of the side tape (116, 216, 316, 416) is between the body tape (119, 317, 417) and a major surface of the electrode assembly (110).

9. The method as claimed in claims 1 to 6, further comprising attaching a side tape (116, 216, 316, 416) to at least one of side surfaces of the electrode assembly (110), after attaching the body tape (119, 317, 417).

10. The method as claimed in claim 9, wherein attaching the side tape (116, 216, 316, 416) includes attaching the side tape (116, 216, 316, 416) to overlap at least a portion of the body tape (119, 317, 417), such that at least the portion of the body tape (119, 317, 417) is between the side tape (116, 216, 316, 416) and a major surface of the electrode assembly (110).

11. The method as claimed in claims 1 to 10, wherein attaching the top tape (117, 217, 319) includes attaching the top tape (117, 217, 319) to surround an edge of the electrode assembly (110) in a leading-out direction of the first electrode tab (111a, 211a, 311a, 411a) and the second electrode tab (112a, 212a, 312a, 412a).

12. The method as claimed in claims 1 to 11, wherein attaching the top tape (117, 217, 319) includes attaching the top tape (117, 217, 319) to fix a portion of the separator (113, 213, 313, 413) protruding outwardly from the upper end portion of the electrode assembly (110) beyond the first electrode plate (111, 211, 311, 411) and the second electrode plate (112, 212, 312, 412).

13. The method as claimed in claims 1 to 12, wherein, in a longitudinal direction of the electrode assembly (110), the body tape (119, 317, 417) has a length of 14% to 16% of a length of the electrode assembly (110).

14. The method as claimed in claims 1 to 13, wherein the top tape (117, 217, 319), the body tape (119, 317, 417), or the bottom tape (118, 218, 318, 418) is formed by applying an adhesive to a synthetic resin selected from among polyethylene terephthalate (PET), polypropylene (PP), and polyimide (PI).

15. A secondary battery (10, 100), comprising:
an electrode assembly (110) including a first electrode plate (111, 211, 311, 411), a second electrode plate (112, 212, 312, 412), and a separator (113, 213, 313, 413) between the first electrode plate (111, 211, 311, 411) and the second electrode plate (112, 212, 312, 412);
a top tape (117, 217, 319) attached to an upper end portion of the electrode assembly (110);
a bottom tape (118, 218, 318, 418) surrounding a lower end portion of the electrode assembly (110);
a body tape (119, 317, 417) attached onto the top tape (117, 217, 319) and surrounding the upper end portion of the electrode assembly (110);
a side tape (116, 216, 316, 416) attached to the electrode assembly (110) and surrounding at least one of side end portions of the electrode assembly (110); and
a case (120) accommodating the electrode assembly (110), the case (120) including a sealing portion (124) along an edge portion thereof,
wherein the first electrode plate (111, 211, 311, 411) includes a first electrode current collector, a first electrode active material layer (111c) on the first electrode current collector, a first electrode uncoated portion (111b) at an end of the first electrode current collector adjacent to the first electrode active material layer (111c), and a first electrode tab (111a, 211a, 311a, 411a) at an end portion of the first electrode uncoated portion (111b), and
wherein the second electrode plate (112, 212, 312, 412) includes a second electrode current collector, a second electrode active material layer on the second electrode current collector, a second electrode uncoated portion at an end of the second electrode current collector adjacent to the second electrode active material layer, and a second electrode tab (112a, 212a, 312a, 412a) at an end portion of the second electrode uncoated portion.
